# EUROPEAN PATENT SPECIFICATION

(11) **EP 1 603 245 B1**
(45) Date of publication and mention of the grant of the patent: **30.07.2008**
(21) Application number: 05008563.8
(22) Date of filing: 19.04.2005
(51) Int. Cl.: H04B 1/10

(54) **Adjacent interference detecting device, adjacent interference removing device, and receiving device**
Nachbarkanalstörungsdetektor, Einrichtung zum Entfernen von Nachbarkanalstörungen und Empfänger
Dispositif de détection d'interférence adjacent, dipositif d'élimination d'interférence et récepteur

(30) Priority: 31.05.2004 JP 2004161702
(43) Date of publication of application: 07.12.2005
(73) Proprietor: Pioneer Corporation, Meguro-ku, Tokyo (JP)
(72) Inventor: Tsuboi, Yoshimi Kawagoe Koujou, Pioneer Corp., Kawagoe-shi Saitama-ken 350-8555 (JP)
(74) Representative: Popp, Eugen

(56) References cited:
- EP-A- 1 379 003
- US-A- 4 356 567
- US-A- 4 654 884
- US-A- 4 731 874

## Description

### BACKGROUND OF THE INVENTION

The present invention relates to an adjacent interference detecting device and an adjacent interference detecting method for detecting an adjacent interference which is responsible for a deteriorated reception quality, also relates to an adjacent interference removing device and an adjacent interference removing method for removing an influence of an adj acent interference, further relates to a receiving device capable of inhibiting an influence of an adjacent interference when receiving a radio wave.

With regard to a radio broadcast receiving device or the like, an important task is to inhibit an influence of any adjacent interference wave. This is because when receiving a broadcast wave of a desired broadcast station, if an adjacent interference wave occurs within a frequency band assigned to the broadcast wave, a reception quality deterioration called adjacent interference will happen.

Conventionally, there has been known a radio receiving device (radio receiver) so fabricated that it can handle an adjacent interference, as disclosed in Japanese Unexamined Patent Application Publication No. Hei 10-200435.

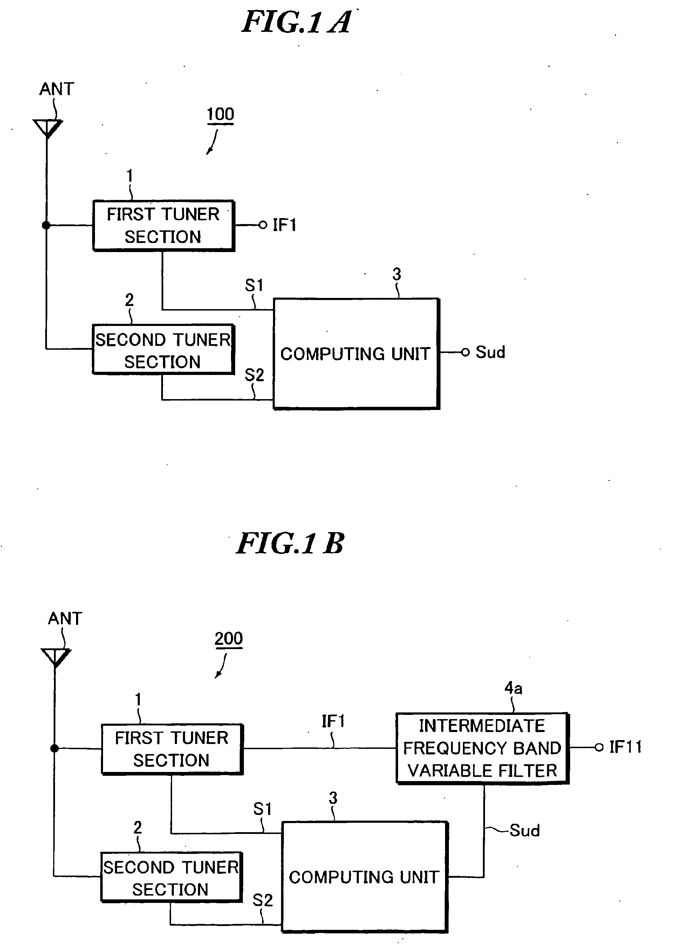

Such a radio receiving device has a seeking function for automatically detecting a receivable broadcast wave (broadcast signal), and, as shown in Fig. 1 of the above-mentionedpatent gazette, comprises: an adjacent interference detecting circuit (8) which detects, at the time of seeking, a noise component contained in an S-meter signal (which indicates the intensity of an electric field that can also be used as a reception sensitivity) outputted from an intermediate frequency amplifying/detecting circuit (4); and an adjacent interference signal detecting unit (26) which judges the presence of an adjacent interference based on the detected noise component.

Then, at the time of seeking, if the noise component contained in the S-meter signal is equal to or higher than a predetermined value, the adjacent interference signal detecting unit (26) will judge that there is an adjacent interference so as to continue the seeking operation. On the other hand, if the noise component is lower than the predetermined value, the adjacent interference signal detecting unit (26) will judge that there is no adjacent interference so as to stop the seeking operation.

However, with regard to the radio receiver disclosed in Japanese Unexamined Patent Application Publication No. Hei 10-200435, as shown in Fig. 2 of the patent gazette, the adjacent interference detecting circuit (8) is formed by a high pass filter and a band pass filter, while the adjacent interference signal detecting unit (26) judges the presence of an adjacent interference based on the noise component contained in the S-meter signal passing through these filters.

However, since a noise will mix into an S-meter signal not only when an adjacent interference wave occurs but also when a multipass happens or when there is a weak electric field, the adjacent interference signal detecting unit (26) will perform a misjudgment, rendering it impossible to judge an influence of an adjacent interference with an acceptable precision.

For this reason, with regard to the above-mentioned conventional technology of judging the presence of an influence of an adjacent interference in accordance with a noise component contained in the S-meter signal, there has been a problem that it is impossible to plan an adequate measure for dealing with an adj acent interference.

Especially, in Europe there has been a widely spreading RDS broadcast (Radio Data System) serving as data multiplex broadcasting. Further, a radio receiving device which receives the RDS broadcast is provided with a function so constituted that when the receiving device receives frequency list information (transmitted hereto as service information from each broadcasting station) of an identical program of each broadcasting station in each reception area, and when the reception area of the radio receiving device changes due to the movement of a mobile body such as an automobile or the like, the RDS data can be used to effect a switchover to automatically select a broadcasting station capable of ensuring an acceptable reception state.

Then, when the presence of an adjacent interference is judged in accordance with a noise component contained in an S-meter signal, and when a channel selection switch-over using the RDS data is performed in accordance with the result of the judgment, a misjudgment will happen incorrectly showing that there is an adjacent interference when a multipass happens or when there is a weak electric field, hence resulting in a mistaken operation which causes an unnecessary switch-over.

Moreover, there has been known another type of receiving device so fabricated that when an adjacent interference occurs, the center frequency of an IF filter which passes an intermediate frequency signal (IF signal) is biased towards a certain frequency separated from the adjacent interference wave, thereby inhibiting an influence of the adjacent interference.

Then, if the presence of an adjacent interference is judged in accordance with a noise component contained in an S-meter signal and the center frequency of an IF filter is biased in accordance with the result of the judgment, since it is impossible to detect an extent of an influence of an adjacent interference only by detecting whether or not there is an adjacent interference, it is impossible to precisely adjust a biasing amount of the center frequency.

US 4,731,874 and EP 1 379 003, are considered to represent prior art which is closest to that of the current claims. There is discussion presented in each of these documents, related to avoidance of adjacent interference in a wave. At least first and second tuner means are discussed in these prior documents, with an aim to providing means and methods of avoiding adjacent wave interference.

### SUMMARY OF THE INVENTION

The present invention provides an adjacent interference detecting device in accordance with independent claim 1; an adjacent interference removing device in accordance with independent claim 3; a receiving device capable of inhibiting the influence of an adjacent interference wave in accordance with claim 4 and a method of detecting adjacent interference in accordance with claim 6. Preferred embodiments of the invention are reflected in the dependent claims therefrom.

The claimed invention can be better understood in view of the embodiments described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawings" as well as the "Detailed Description of the Preferred Embodiments."

It is an object of the present invention to provide an adjacent interference detecting device and an adjacent interference detecting method capable of detecting an influence of an adjacent interference with an improved precision, an adjacent interference removing device and an adjacent interference removing method for removing an influence of an adjacent interference, as well as a receiving device capable of inhibiting an influence of an adjacent interference when receiving a radio wave.

According to one aspect of the present invention, there is provided an adjacent interference detecting device for detecting an influence of an adjacent interference wave on a desired wave, comprising: first tuner means for tuning/receiving the desired wave; second tuner means for tuning/receiving an electric wave having a different frequency from the frequency of the desired wave; and computing means for computing a ratio of an S-meter signal outputted from the first tuner means to another S-meter signal outputted from the second tuner means, and for outputting a computed ratio as a value indicating an extent of an influence of an adjacent interference.

According to another aspect of the present invention, there is provided an adjacent interference removing device for inhibiting an influence of an adjacent interference wave on a desired wave, comprising: first tuner means for tuning/receiving the desired wave; second tuner means for tuning/receiving an electric wave having a different frequency from the frequency of the desired wave; computing means for computing a ratio of an S-meter signal outputted from the first tuner means to another S-meter signal outputted from the second tuner means, and for outputting a computed ratio as a value indicating an extent of an influence of an adjacent interference; and intermediate frequency band variable filter means which passes an intermediate frequency signal outputted from the first tuner means and, biases a pass band with respect to the intermediate frequency signal or adjusts the width of the pass band in accordance with the computed ratio.

According to a further aspect of the present invention, there is provided a receiving device capable of inhibiting an influence of an adjacent interference wave on a desired wave, comprising: first tuner means for tuning/receiving the desired wave; second tuner means for tuning/receiving an electric wave having a different frequency from the frequency of the desired wave; computing means for computing a ratio of an S-meter signal outputted from the first tuner means to another S-meter signal outputted from the second tuner means, and for outputting a computed ratio as a value indicating an extent of an influence of an adjacent interference; intermediate frequency band variable filter means which passes an intermediate frequency signal outputted from the first tuner means and, biases a pass band with respect to the intermediate frequency signal or adjusts the width of the pass band in accordance with the computed ratio; and detector means for detecting a signal component of the intermediate frequency signal outputted from the intermediate frequency band variable filter means.

According to one more aspect of the present invention, there is provided a receiving device for receiving a desired wave by inhibiting an influence of an adjacent interference wave, comprising: first tuner means for tuning/receiving the desired wave; second tuner means for tuning/receiving an electric wave having a different frequency from the frequency of the desired wave; computing means for computing a ratio of an S-meter signal outputted from the first tuner means to another S-meter signal outputted from the second tuner means, and for outputting a computed ratio as a value indicating an extent of an influence of an adjacent interference; detecting means for detecting an intermediate frequency signal outputted from the first tuner means; decoder means for reproducing information showing a frequency list of an identical program of a broadcasting station from a detection signal outputted from the detecting means; and control means which, upon judging the presence of an adjacent interference in accordance with the computed ratio, switches over to a tuning frequency of the first tuner means in accordance with the information showing the frequency list of the identical program of the broadcasting station.

According to one more aspect of the present invention, there is provided an adjacent interference detecting method for detecting an influence of an adjacent interference wave on a desired wave, comprising the steps of: providing first tuner means for tuning/receiving the desired wave and second tuner means for tuning/receiving an electric wave having a different frequency from the frequency of the desired wave; and computing a ratio of an S-meter signal outputted from the first tuner means to another S-meter signal outputted from the second tuner means, and outputting a computed ratio as a value indicating an extent of an influence of an adjacent interference.

According to one more aspect of the present invention, there is provided an adjacent interference removing method for inhibiting an influence of an adjacent interference wave on a desired wave, comprising the steps of: providing first tuner means for tuning/receiving the desired wave, and second tuner means for tuning/receiving an electric wave having a different frequency from the frequency of the desiredwave, as well as an intermediate frequency band variable filter means which passes an intermediate frequency signal outputted from the first tuner means; computing a ratio of an S-meter signal outputted from the first tuner means to another S-meter signal outputted from the second tuner means, and outputting a computed ratio as a value indicating an extent of an influence of an adjacent interference; and biasing a pass band with respect to the intermediate frequency signal or adjusting the width of the pass band in the intermediate frequency band variable filter means in accordance with the computed ratio.

### BRIEF DESCRIPTION OF THE DRAWINGS

These and other obj ects and advantages of the present invention will become clear from the following description with reference to the accompanying drawings, wherein:
Figs. 1A and 1B are block diagrams showing the structures of an adjacent interference detecting device and an adjacent interference removing device formed according to embodiments of the present invention;
Figs. 2A and 2B are block diagrams showing the structures of receiving devices formed according to embodiments of the present invention;
Fig. 3 is a block diagram showing the structure of a receiving device formed according to an embodiment of the present invention; and
Fig. 4 is a block diagram showing the structure of another receiving device formed according to an embodiment of the present invention.

### DETAILED DESCRIPTION OF THE PREFERRED EMBODIMENTS

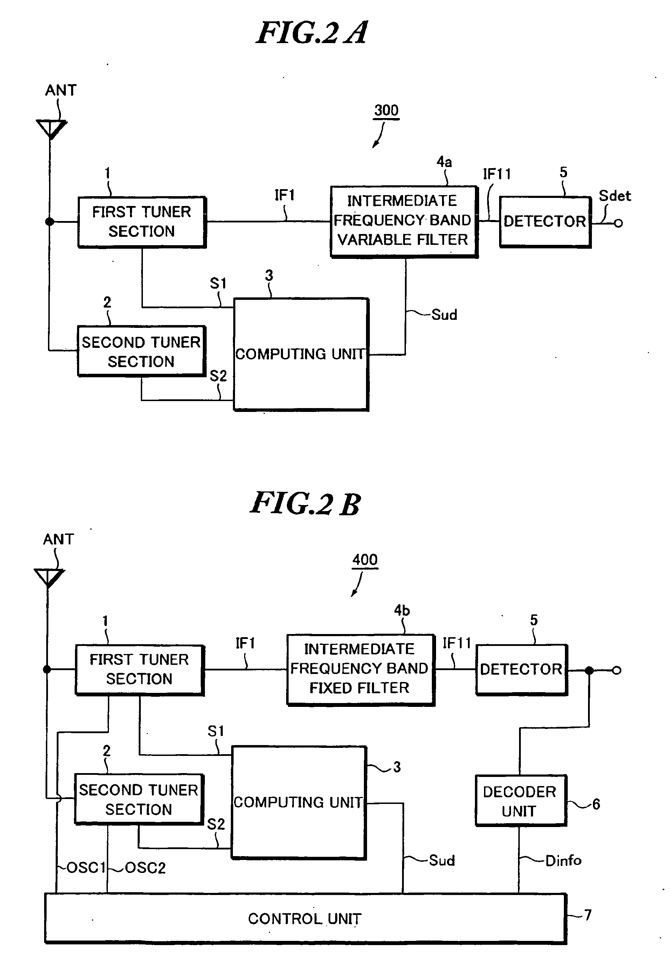

In the following, description will be given to explain an adjacent interference detecting device, an adjacent interference removing device and a receiving device (all formed according to embodiments of the present invention), with reference to Fig.1 and Fig. 2. In detail, Fig.1A is a block diagram showing the structure of the adjacent interference detecting device, Fig.1B is a block diagram showing the structure of the adjacent interference removing device, and Figs. 2A and 2B are block diagrams showing the structure of the receiving devices representing two different embodiments.

At first, description will be given to explain the structure of the adjacent interference detecting device 100 of one embodiment, with reference to Fig.1A.

As shown, the adjacent interference detecting device 100 comprises: a first tuner section 1 and a second tuner section 2, both connected with an antenna ANT for receiving incoming radio waves; a computing unit 3 which receives S-meter signals S1, S2 outputted respectively from the first and second tuner sections 1, 2.

The first tuner section 1 is so provided that once a user operates at an operating unit (not shown) to designate a his or her desired broadcasting station, the first tuner section 1 will tune/receive the designated broadcast wave (desired wave), and then output an intermediate frequency signal (IF signal) IF1 as well as the S-meter signal S1 indicating a reception intensity.

On the other hand, the second tuner section 2 tunes/receives a radio wave having a different frequency from that of the desired wave, generates and then outputs an S-meter signal S2 indicating a reception intensity from a change in the level of an intermediate frequency signal (not shown) generated at the time of reception.

In more detail, the second tuner section 2 operates using the center frequency of a desired radio wave as a reference frequency, and tunes/receives signals from adjacent stations broadcasting with at least one of frequencies which are for example 100 kHz, 200 kHz, -100 kHz, -200 kHz separated from the center frequency, and outputs S-meter signal S2 at respective times of reception.

The computing unit 3 performs a computation to obtain an amplitude ratio (S1/S2) of S-meter signals S1, S2 respectively outputted from the first and second tuner sections 1, 2, and then outputs the value of such ratio (hereinafter, referred to as U/D ratio) as a detection signal Sud indicating an extent of an adjacent interference.

Namely, when the second tuner section 2 tunes/receives an adjacent interference wave, since a higher level of the S-meter signal S2 causes a larger influence of an adjacent interference, the computing unit 3 computes an amplitude ratio (S1/S2) of the S-meter signals S1 and S2, so as to generate and then output a detection signal Sud which changes in a manner such that a larger influence of an adjacent interference will cause a smaller U/D ratio.

According to the above-described adjacent interference detecting device 100, when an adjacent interference wave (which is responsible for a deteriorated reception quality) occurs, the computing unit 3 will operate to compute an amplitude ratio of S-meter signals S1 and S2 respectively outputted from the first and second tuner sections 1 and 2, so as to obtain a ratio of a reception intensity of an adj acent interference wave to a reception intensity of a desired wave, thereby making it possible to accurately detect as a constant value an extent of an influence of an adjacent interference on a desired wave.

Next, description will be given to explain the adjacent interference removing device 200 formed according to an embodiment of the present invention, with reference to Fig.1B. However, elements which are the same as or corresponding to those in Fig.1 A are represented by the same reference numerals.

As shown in Fig.1B, the adjacent interference removing device 200 comprises: a first tuner section 1 and a second tuner section 2, both connected with an antenna ANT for receiving incoming radio waves; a computing unit 3 for computing the value (ratio U/D) of an amplitude ratio of S-meter signals S1 and S2 respectively outputted from the first and second tuner sections 1, 2 and for outputting a detection signal Sud whose level changes in response to such ratio U/D; and an intermediate frequency band variable filter 4a which receives an intermediate frequency signal IF1 outputted from the first tuner section 1.

Here, the intermediate frequency band variable filter 4a is formed by a band-pass filter capable of biasing a pass band with respect to the intermediate frequency signal IF1, and can automatically adjust a biasing amount of a pass band on a frequency axis, in response to the level of the detection signal Sud outputted from the computing unit 3.

Inmore detail, the intermediate frequency band variable filter 4a is formed by a band-pass filter constructed such that a smaller ratio (ratio U/D) of a reception intensity of an adjacent interference wave to a reception intensity of a desired wave will cause the adjacent interference to produce a larger influence, and that if the pass band with respect to the intermediate frequency signal IF1 is biased toward a frequency separated from a specific frequency at which an adjacent interference wave exists, what is passed is only a signal component IF11 (free from any influence of an adjacent interference) of the intermediate frequency signal 1F1.

According to the adjacent interference removing device 200 having the above-described structure, when an adjacent interference wave (which is responsible for a deteriorated reception quality) occurs, the computing unit 3 will operate to compute an amplitude ratio of the S-meter signals S1 and S2 respectively outputted from the first and second tuner sections 1 and 2, so that it is possible to remove an influence caused due to a multi-pass or a weak electric field, and to compute a ratio (ratio U/D) of a reception intensity of an adj acent interference wave to a reception intensity of a desired wave, thereby making it possible to accurately detect as a constant value an extent of an influence of an adjacent interference on a desired wave.

As mentioned above, when the intermediate frequency band variable filter 4a operates to bias, in response to the level of the detection signal Sud, the pass band with respect to the intermediate frequency signal IF1 towards a frequency separated from a specific frequency at which an adjacent interference wave exists, it is possible to pass the signal component IF11 (free from any influence of an adjacent interference wave) of the intermediate frequency signal IF1. Therefore, it is possible to regenerate a detection signal or the like with an acceptable reception quality, only by detecting the signal component IF11.

Further, since a detection signal Sud indicates as an appropriate value an extent of an influence of an adjacent interference wave on a desired wave, it is possible to accurately adjust a biasing amount of the pass band of the intermediate frequency band variable filter 4a, in response to the level of the detection signal Sud. Accordingly, when an adjacent interference wave occurs, it is possible to avoid some unfavorable situations where the pass band of the intermediate frequency band variable filter 4a is over-biased so that information of the desired wave is insufficient, or a biasing amount of the pass band is too small so that it is impossible to sufficiently inhibit an influence of an adjacent interference.

In the above-described adjacent interference removing device 200, the intermediate frequency band variable filter 4a is used to bias the pass band of the intermediate frequency signal IF1 in response to the level of the detection signal Sud. However, as a modification of the present embodiment, it is also possible for the above-described intermediate frequency band variable filter 4a to be so provided that the center frequency of the intermediate frequency signal IF1 (namely, a carrier-frequency within a range of maximum-frequency deviation) can serve as a reference to change the width of the pass band in response to the level of the detection signal Sud.

The provision of such intermediate frequency band variable filter 4a makes it possible to narrow, in response to a decrease in the level of the detection signal Sud, the pass band with the center frequency of the intermediate frequency signal IF1 as a reference, thereby inhibiting the passing of a noise component caused due to an adjacent interference, thus allowing only the signal component IF11 of the intermediate frequency signal IF1 to pass therethrough. In this way, it is possible to reproduce a detection signal with an acceptable reception quality by detecting the passed signal component IF11.

Further, as another modified embodiment, it is also possible to provide an intermediate frequency band variable filter having a function capable of biasing the pass band with respect to the intermediate frequency signal IF1 in response to the level of the detection signal Sud, and another function capable of changing, in response to the detection signal Sud, the width of a pass band with the center frequency of the intermediate frequency signal IF1 as a reference.

Namely, the maximum width of an adjustable pass band of the intermediate frequency band variable filter 4a is to be adjusted so as to match the width of the maximum frequency deviation of the intermediate frequency signal IF1.

Then, once an adjacent interference wave occurs, both the first tuner section 1 and the second tuner section 2 will operate to perform tuning/reception so that it is possible to find the position of the adjacent interference wave on the frequency axis with respect to a desired wave. In this way, a cut-off frequency at certain frequency point where the adjacent interference wave occurs will thenbe automatically changed in response to the level of the detection signal Sud, thereby making it possible to output (extract) a signal component IF11 (less affected by the adjacent interference) of the intermediate frequency signal IF1.

For example, at the time the first and second tuner sections 1 and 2 tune/receive signals, if the frequency of an adjacent interference wave is higher than that of a desired wave, a high cut-off frequency of the intermediate frequency band variable filter 4a will be automatically adjusted in response to the level of the detection signal Sud. On the other hand, if the frequency of an adjacent interference is lower than that of a desired wave, a low cut-off frequency of the intermediate frequency band variablefilter 4a will be automatically adjusted in response to the level of the detection signal Sud. In this way, it is possible to adjust the pass band of the intermediate frequency band variable filter 4a so as to remove the influence of the adjacent interference.

Next, description will be given to explain the structure of the receiving device 300 of the present invention, with reference to Fig. 2A. However, in Fig. 2A, elements which are the same as or corresponding to those in Figs.1A and 1B are represented by the same reference numerals.

As shown in Fig. 2A, the receiving device 200 comprises: a first tuner section 1 and a second tuner section 2, both connected with an antenna ANT for receiving incoming radio waves; a computing unit 3 for computing the value (ratio U/D) of an amplitude ratio of S-meter signals S1 and S2 respectively outputted from the first and second tuner sections 1, 2 and for outputting a detection signal Sud whose level changes in response to such ratio U/D; an intermediate frequency band variable filter 4a which receives an intermediate frequency signal IF1 outputted from the first tuner section 1; and a detector 5 for detecting the signal component IF11 of the intermediate frequency signal IF1 which has passed through the intermediate frequency band variable filter 4a.

Here, the intermediate frequency band variable filter 4a is formed by a band pass filter constructed such that a lower level of a detection signal Sdet outputted from the computing unit 3, i.e., a smaller ratio (ratio U/D) of a reception intensity of an adjacent interference wave to a reception intensity of a desired wave will cause the adjacent interference to produce a larger influence, and that if the pass band with respect to the intermediate frequency signal IF1 is biased toward a frequency separated from a specific frequency at which an adjacent interference wave exists, what is passed is only a signal component IF11 (free from any influence of an adjacent interference) of the intermediate frequency signal 1F1 since the passing of the adjacent interference wave is inhibited.

According to the receiving device 300 having the above-described structure, when an adjacent interference wave (which is responsible for a deteriorated reception quality) occurs, the computing unit 3 will operate to compute an amplitude ratio of the S-meter signals S1 and S2 respectively outputted from the first and second tuner sections 1 and 2, so that it is possible to compute a ratio of a reception intensity of an adjacent interference wave to a reception intensity of a desired wave, thereby making it possible to accurately detect as a constant value an extent of an influence of an adjacent interference on a desired wave.

As mentioned above, when the intermediate frequency band variable filter 4a operates to bias, in response to the level of the detection signal Sud, the pass band with respect to the intermediate frequency signal IF1 towards a frequency separated from a specific frequency at which an adjacent interference wave exists, it is possible to pass the signal component IF11 (free from any influence of an adjacent interference wave) of the intermediate frequency signal IF1. Therefore, it is possible to regenerate a detection signal Sdet with an acceptable reception quality, by detecting the signal component IF11 using the detector 5.

In the above-described receiving device 300, the intermediate frequency band variable filter 4a is used to bias the pass band of the intermediate frequency signal IF1 in response to the level of the detection signal Sud. However, as a modification of the embodiment described with reference to Fig. 1B, it is also possible for the above-described intermediate frequency band variable filter 4a to be so provided that the center frequency of the intermediate frequency signal IF1 (namely, a carrier-frequency within a range of maximum-frequency deviation) can serve as a reference to change the width of the pass band in response to the level of the detection signal Sud. Further, another special version of the intermediate frequency band variable filter 4 can be so formed that it can adjust the maximum width of the adjustable pass band to the width of the maximum frequency deviation of the intermediate frequency signal IF1, and thus automatically changes a cut-off frequency at a certain frequency generating an adjacent interference wave, in response to the level of the detection signal Sud.

Next, description will be given to explain the structure of another receiving device 400 of the present invention, with reference to Fig. 2B. However, in Fig. 2B, elements which are the same as or corresponding to those in Figs.1A, 1B and 2A are represented by the same reference numerals.

As shown in Fig. 2B, the receiving device 400 is provided for receiving RDS-broadcast which is used in a broadcasting station for performing data multiplexing to transmit broadcast waves.

Specifically, the receiving device 400 comprises: a first tuner section 1 and a second tuner section 2; a digital computing unit 3 for receiving S-meter signal S1 of digital data train outputted from the first tuner section 1 and S-meter signal S2 of digital data train outputted from the second tuner section 1; an intermediate frequency band fixing filter 4b for limiting the frequency band of the intermediate frequency signal IF1 of the digital data train outputted from the first tuner section 1 so as to output a signal component IF11 (free from any noise) of the intermediate frequency signal IF1; a detector 5 for digitally detecting the signal component IF11 of the intermediate frequency signal IF1 so as to output a detection signal Sdet; a decoder unit 6 for decoding the detection signal Sdet so as to reproduce data (RDS-data) Dinfo sent from several broadcasting stations as service-information and indicating the transmission frequency of each station; and a control unit 7.

Here, the intermediate frequency band fixing filter 4b is formed by a band pass filter whose pass band has been determined according to the width of the maximum frequency deviation with the center frequency of the intermediate frequency signal IF1 as a reference point.

The control unit 7 is so provided that once a user has selected a desired broadcasting station by operating at an operating unit (not shown), a tuning control signal OSC1 will be supplied to the first tuner section 1 to set a local signal frequency so as to tune/receive a broadcast wave (desired wave) of the selected broadcasting station, while a tuning control signal OSC2 will be supplied to the second tuner section 2 to set a local signal frequency so as to tune/receive a radio wave having a different frequency from that of the desired wave.

In more detail, the control unit 7 controls the second tuner section 2 so that the second tuner section tunes/receives an adjacent station having at least one frequency which is 100 kHz, 200 kHz, -100 kHz, or -200 kHz separated from the center frequency (serving as a reference point) of the desired wave, or successively tunes/receives waves having frequencies which are 100 kHz, 200 kHz, -100 kHz, -200 kHz separated from the above center frequency.

Specifically, the control unit 7 further contains storage means (not shown) such as semiconductor memory which receives in every appropriate period RDS-data Dinfo regenerated by the decoder 6, updates the same to the latest RDS-data Dinfo and then stores the same.

Next, an operation of the receiving device 400 having the above-described structure will be explained as follows.

Namely, when the first tuner section 1 operates to receive the wave of a broadcasting station selected by a user, and when the second tuner section 2 under the control of the control unit 7 operates to receive waves of adjacent stations whose frequencies are 100 kHz, 200 kHz, -100 kHz, -200 kHz separated from the center frequency of the desired wave (when regarding such center frequency as a reference point), once the level of the detection signal Sud becomes lower than a predetermined threshold value, the control unit 7 will judge that the desired wave received by the first tuner section is now being influenced by an adjacent interference.

Moreover, the control unit 7, upon searching out the RDS-data Dinfo stored in the aforementioned storage means, will determine a transfer frequency of another broadcasting station capable of reducing the influence of an adjacent interference (for example, an AF station which broadcasts the same program at the same time as the broadcasting station whose broadcast wave is being received by the first tuner section until the occurrence of the adjacent interference). Further, the control unit 7 performs a control based on the tuning control signal OSC1 so as to allow the first tuner section 1 to perform tuning/reception in accordance with a local signal frequency corresponding to a determined transfer frequency, thereby ensuring a reception having a reduced influence of an adj acent interference.

As described above, according to the receiving device 400 of the present embodiment, once an adjacent interference wave (which is responsible for a deteriorated reception quality) occurs, the computing unit 3 will operate to compute an amplitude ratio of the S-meter signals S1 and S2 respectively outputted from the first and second tuner sections 1 and 2, so that it is possible to remove an influence caused due to a multi-pass or a weak electric field, and to compute a ratio of a reception intensity of an adjacent interference wave to a reception intensity of a desired wave, thereby making it possible to accurately detect as a constant value an extent of an influence of an adjacent interference on a desired wave.

Then, once the control unit 7 judges, in accordance with the detection signal Sud, that an adjacent interference is occurring, the control unit will switch the receiving device over to other broadcasting station searched from the RDS-data Dinfo so as to let the first tuner section to perform tuning/reception, thereby ensuring a quick switchover to receive a broadcast wave (a desired wave) free from any adjacent interference, and thus allowing the detector 5 to output the detection signal Sdet free from any adjacent interference.

Namely, the control unit 7 stores the RDS-data Dinfo before the occurrence of an adjacent interference is detected, so that once an adjacent interference occurs, the control unit will perform a switchover in accordance with the RDS-data Dinfo to receive radio waves of other broadcasting stations capable of inhibiting the influence of an adjacent interference. Therefore, after an adj acent interference has occurred, if the interference is compared with a case where other broadcasting station not affected by any adjacent interference is detected by a seek operation, it is possible to perform a quick switchover to receive a broadcast wave (a desired wave) free from any adjacent interference. Moreover, as result of such quick switchover, it is possible to provide a user with a good reception environment.

### [Example 1]

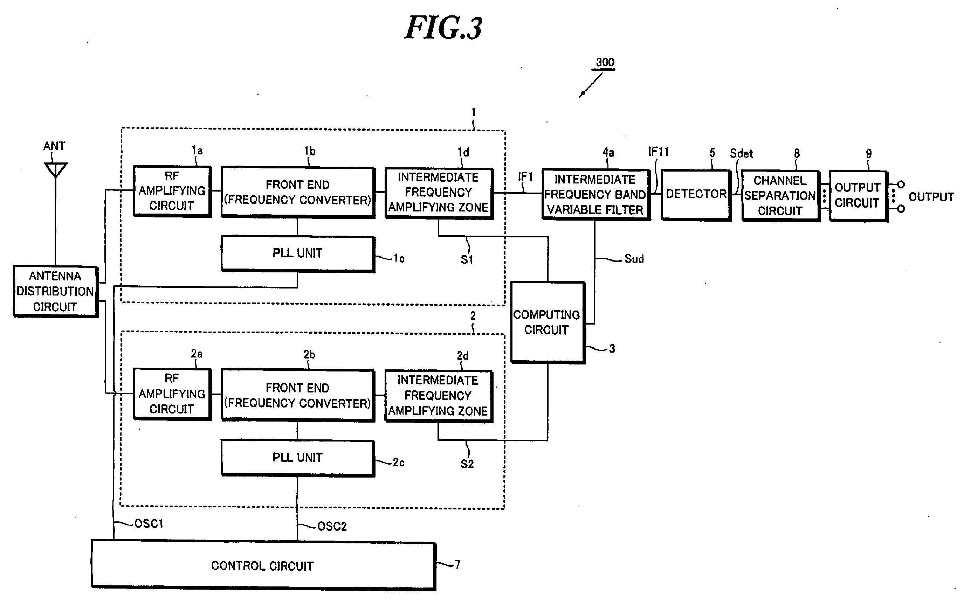

Next, description will be given with reference to Fig. 3 to explain a more detailed embodiment of the receiving device shown in Fig. 2A. In fact, Fig. 3 is a block diagram showing the structure of the receiving device of the present embodiment, while the elements which are the same as or corresponding to those shown in Fig. 2 are represented by the same reference numerals.

As shown in Fig. 3, the receiving device 300 comprises: an antenna distribution circuit (not labeled with a reference numeral) connected with an antenna ANT which receives incoming radio waves; the first tuner section 1 and the second tuner section 2 receiving high frequency reception signals distributed by and outputted from the antenna distribution circuit; a computing circuit 3; an intermediate frequency band variable filter 4a; a detector 5; a channel separation circuit 8; an output circuit 9; and a control circuit 7.

The first tuner section 1 comprises: an RF amplifying circuit 1a which performs a high frequency amplification on a high frequency reception signal supplied through the above-mentioned antenna distribution circuit; a front end (frequency converter) 1b which mixes reception signal (RF signal) outputted from the RF amplifier 1a with the local signal supplied from PLL unit 1c; and an intermediate frequency amplifying zone 1d for amplifying and outputting the above-mentioned intermediate frequency signal and outputting an S-meter signal S1. Then, the intermediate frequency signal IF1 amplified in the intermediate frequency amplifying zone 1d is supplied to the intermediate frequency band variable filter 4a, while S-meter signal S1 is supplied to the computing circuit 3.

The second tuner section 2 has the same structure as the first tuner section 1. In detail, an RF amplifier 2a amplifies a high frequency reception signal supplied from the antenna distribution circuit. A front end 2b operates to mix the amplified reception signal with the local signal outputted from the PLL unit 2c so as to produce an intermediate frequency signal. An intermediate frequency amplifying zone 2d produces an S-meter signal S2 from the intermediate frequency signal and supplies the same to the computing circuit 3.

Here, the PLL unit 1c of the first tuner section 1 operates in accordance with a channel selection control signal OSC1 supplied from the control circuit 7 so as to supply a local signal consisting of local oscillation frequency (for tuning/receiving a desired wave) to the front end 1b. On the other hand, the PLL unit 2c of the second tuner section 1 operates in accordance with a channel selection control signal OSC2 supplied from the control circuit 7, so as to supply a local signal having a different frequency from a desired wave to the front end 2b.

In more detail, the control circuit 7 controls the PLL unit 1c to generate a local signal (whose frequency changes successively) and supply the same to the front end 2b, so that the receiving device can successively tune/receive adjacent stations whose frequencies are 100 kHz, 200 kHz, -100 kHz, -200 kHz separated from the center frequency of the desired wave (regarding such center frequency as a reference point).

The computing circuit 3 is formed by a divider circuit which calculates the value (U/D ratio) of an amplitude ratio (S1/S2) of S-meter signal S2 to S-meter signal S1, and outputs a detection signal Sud whose signal level changes in response to the U/D ratio.

The intermediate frequency band variable filter 4a is formed by a band pass filter which has a pass band coincident with the width of the maximum frequency deviation of the intermediate frequency signal IF1, and changes the cut-off frequency in response to a reduction in the level of the detection signal Sud, thereby narrowing the width of the pass band.

The detector 5 generates and outputs the detection signal Sdet by detecting the signal component IF11 of the intermediate frequency signal IF1 passing through the intermediate frequency band variable filter 4a.

When receiving programs based on two-channel stereophonic broadcast or multi-channel (two or more channels) broadcast, a channel separation circuit 8 operates to separate the detection signal Sdet into so-called audio signals on each respective channels. Further, an output circuit 9 performs a power amplification or the like, and supplies an amplifiedpower to the speaker so as to reproduce a sound such as music.

The control circuit 7 is provided such that once a desired broadcast station is specified by a user through a predetermined operating unit (not shown), the control circuit will control the PLL unit 1c by virtue of the channel selection control signal OSC1, so as to allow the front end 1b to tune/receive a broadcast wave (a desired wave) of the user's specified station. Further, the control circuit 7 controls PLL unit 2c by virtue of the channel selection control signal OSC2 so as to allow the front end 2b to tune/receive a radio wave having a different frequency from that of the desired wave.

According to the receiving device 300 of the present embodiment having the above-described structure, when an adj acent interference wave (which is responsible for a deteriorated reception quality) occurs, the computing unit 3 will operate to compute an amplitude ratio of the S-meter signals S1 and S2, so that it is possible to compute a ratio of a reception intensity of an adjacent interference wave to a reception intensity of a desired wave, thereby making it possible to accurately detect as a constant value an extent of an influence of an adjacent interference on a desired wave.

As mentioned above, when the intermediate frequency band variable filter 4a operates to narrow, in response to the level of the detection signal Sud, the pass band with respect to the intermediate frequency signal IF1, it is possible to pass the signal component IF11 (free from any influence of an adjacent interference wave) of the intermediate frequency signal IF1. Therefore, it is possible to regenerate a detection signal Sdet with an acceptable reception quality, by detecting the signal component IF11 using the detector 5. Further, by driving a loudspeaker in accordance with the detection signal Sdet, it is possible to reproduce a sound such as a music or the like having a reduced amount of noise which becomes a jarring for a user.

### [Example 2]

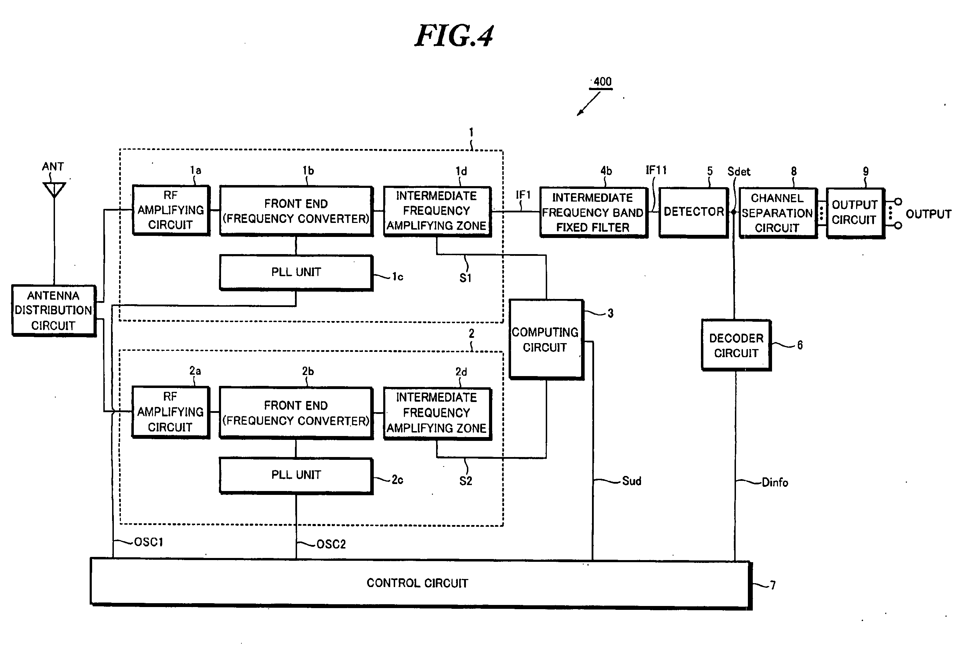

Next, description will be given with reference to Fig. 4 to explain a more detailed embodiment of the receiving device shown in Fig. 2B. Here, Fig. 4 is a block diagram showing the structure of the receiving device of the present embodiment, while the elements which are the same as or corresponding to those shown in Fig. 2B are represented by the same reference numerals.

As shown in Fig. 4, the receiving device 400 is a receiver device for receiving radio broadcasts, and comprises: an antenna distribution circuit (not labeled with a reference numeral) connected with an antenna ANT which receives incoming radio waves; the first tuner section 1 and the second tuner section 2 receiving high frequency reception signals distributed by and outputted from the antenna distribution circuit; a computing circuit 3; an intermediate frequency band fixing filter 4a; a detector 5; a decoder circuit 6; a channel separation circuit 8; an output circuit 9; and a control circuit 7.

Here, the first tuner section 1 and the second tuner section 2 have the similar structure as the above-described example 1. Namely, the first tuner section 1 comprises: an RF amplifying circuit 1a which performs a high frequency amplification on a high frequency reception signal supplied through the above-mentioned antenna distribution circuit; a front end (frequency converter) 1b which mixes reception signal (RF signal) outputted from the RF amplifier 1a with the local signal supplied from PLL unit 1c; and an intermediate frequency amplifying zone 1d for amplifying and outputting the above-mentioned intermediate frequency signal and outputting the S-meter signal S1. Then, the intermediate frequency signal IF1 amplified in the intermediate frequency amplifying zone 1d is supplied to the intermediate frequency band fixing filter 4b, while the S-meter signal S1 is supplied to the computing circuit 3.

The second tuner section 2 has the same structure as the first tuner section 1. In detail, an RF amplifier 2a amplifies a high frequency reception signal supplied from the antenna distribution circuit. A front end 2b operates to mix the amplified reception signal with the local signal outputted from the PLL unit 2c so as to produce an intermediate frequency signal. An intermediate frequency amplifying zone 2d produces an S-meter signal S2 from the intermediate frequency signal and supplies the same to the computing circuit 3.

Here, the PLL unit 1c of the first tuner section 1 operates in accordance with a channel selection control signal OSC1 supplied from the control circuit 7 so as to supply a local signal consisting of local oscillation frequency (for tuning/receiving a desired wave) to the front end 1b. On the other hand, the PLL unit 2c of the second tuner section 1 operates in accordance with a channel selection control signal OSC2 supplied from the control circuit 7, so as to supply a local signal having a different frequency from a desired wave to the front end 2b. Namely, the local signal, with its frequency successively changing, is generated and supplied to the front end 2b, so that the receiving device can successively tune/receive adjacent stations whose frequencies are 100 kHz, 200 kHz, -100 kHz, -200 kHz separated from the center frequency of the desired wave (regarding such center frequency as a reference point).

The computing circuit 3 is formed by a divider circuit which calculates the value (U/D ratio) of an amplitude ratio (S1/S2) of S-meter signal S2 to S-meter signal S1, and outputs a detection signal Sud whose signal level changes in response to the U/D ratio.

The intermediate frequency band variable filter 4a is set in advance at a pass band coincident with the width of the maximum frequency deviation of the intermediate frequency signal IF1.

The detector 5 generates and outputs the detection signal Sdet by detecting the signal component IF11 of the intermediate frequency signal IF1 passing through the intermediate frequency band variable filter 4a.

When receiving programs based on two-channel stereophonic broadcast or multi-channel (two or more channels) broadcast, a channel separation circuit 8 operates to separate the detection signal Sdet into so-called audio signals on each respective channels. Further, an output circuit 9 performs a power amplification or the like, and supplies an amplifiedpower to the speaker so as to reproduce a sound such as music.

A decoding circuit 6 decodes the detection signal Sdet to reproduce the data (RDS data) Dinfo which indicates the transmission frequencies of each respective broadcasting stations transmitted as service information therefrom, and supplies the same to the control circuit 7.

The control circuit 7 is provided such that once a desired broadcast station is specified by a user through a predetermined operating unit (not shown), the control circuit will control the PLL unit 1c by virtue of the channel selection control signal OSC1, so as to allow the front end 1b to tune/receive a broadcast wave (a desired wave) of the user's specified station. Further, the control circuit 7 controls PLL unit 2c by virtue of the channel selection control signal OSC2 so as to allow the front end 2b to tune/receive a radio wave having a different frequency from that of the desired wave.

Furthermore, the control circuit 7 receives the RDS data Dinfo and the detection signal Sud, and upon detecting an influence of an adjacent interference in accordance with the detection signal Sud, controls the PLL unit 1c by the channel selection control signal OSC1 so as to select other broadcasting station searched from the RDS data Dinfo.

Next, an operation of the receiving device 400 having the above-described structure will be explained as follows.

When the first tuner section 1 operates to receive the wave of a broadcasting station selected by a user, and when the second tuner section 2 under the control of the control circuit 7 operates to receive waves of adjacent stations whose frequencies are 100 kHz, 200 kHz, -100 kHz, -200 kHz separated from the center frequency of the desired wave (when regarding such center frequency as a reference point), once the level of the detection signal Sud becomes lower than a predetermined threshold value, the control circuit 7 will judge that the desired wave received by the first tuner section is now being affected by an adjacent interference.

Moreover, the control circuit 7, upon searching out the RDS-data Dinfo stored in the aforementioned storage means, will determine a transfer frequency of another broadcasting station capable of reducing the influence of an adjacent interference (for example, an AF station which broadcasts the same program at the same time as broadcasted by a station whose broadcast wave is being received by the first tuner section until the occurrence of the adjacent interference). Further, the control circuit 7 performs a control based on the tuning control signal OSC1 so as to allow the first tuner section 1 to perform tuning/reception in accordance with a local signal frequency corresponding to a determined transfer frequency, thereby ensuring a reception having a reduced influence of an adjacent interference.

As described above, according to the receiving device 400 of the present embodiment, once an adjacent interference wave (which is responsible for a deteriorated reception quality) occurs, the computing unit 3 will operate to compute an amplitude ratio of the S-meter signals S1 and S2 respectively outputted from the first and second tuner sections 1 and 2, so that it is possible to remove an influence caused due to a multi-pass or a weak electric field, and to compute a ratio of a reception intensity of an adjacent interference wave to a reception intensity of a desired wave, thereby making it possible to accurately detect as a constant value an extent of an influence of an adjacent interference on a desired wave.

Then, once the control circuit 7 judges, in accordance with the detection signal Sud, that an adj acent interference is occurring, the control circuit will switch the receiving device over to other broadcasting station searched from the RDS-data Dinfo so as to allow the first tuner section to perform tuning/reception, thereby ensuring a quick switchover to receive a broadcast wave (a desired wave) free from any adjacent interference, and thus allowing the detector 5 to output the detection signal Sdet free from any adjacent interference.

Namely, the control circuit 7 stores the RDS-data Dinfo before the occurrence of an adjacent interference is detected, so that once an adjacent interference occurs, the control circuit will perform a switchover in accordance with the RDS-data Dinfo to receive radio waves of other broadcasting stations capable of inhibiting the influence of an adjacent interference. Therefore, after an adjacent interference has occurred, if the interference is compared with a case where other broadcasting station not affected by any adjacent interference is detected by a seek operation, it is possible to perform a quick switchover to receive a broadcast wave (a desired wave) free from any adjacent interference. Moreover, as result of such quick switchover, it is possible to provide a user with a good reception environment.

## Claims

1. An adjacent interference detecting device (100) for detecting an influence of an adjacent interference wave on a desired wave, comprising:
first tuner means (1) for tuning/receiving the desired wave;
second tuner means (2) for tuning/receiving an electric wave having a different frequency from the frequency of the desired wave; and
computing means (3) for computing a ratio of an S-meter signal outputted from the first tuner means (1) to another S-meter signal outputted from the second tuner means (2), and for outputting a computed ratio as a value indicating an extent of an influence of an adjacent interference.

2. The adjacent interference detecting device according to claim 1, where the second tuner means (2) tunes/receives an electric wave having a frequency biased 100 kHz, 200 kHz, -100 kHz, or -200 kHz from the center frequency of the desired wave.

3. An adjacent interference removing device (200) for inhibiting an influence of an adjacent interference wave on a desired wave, comprising:
first tuner means (1) for tuning/receiving the desired wave;
second tuner means (2) for tuning/receiving an electric wave having a different frequency from the frequency of the desired wave;
computing means (3) for computing a ratio of an S-meter signal outputted from the first tuner means (1) to another S-meter signal outputted from the second tuner means (2), and for outputting a computed ratio as a value indicating an extent of an influence of an adjacent interference; and
intermediate frequency band variable filter means (4a) which passes an intermediate frequency signal outputted from the first tuner means (1) and, biases a pass band with respect to the intermediate frequency signal (IF1) or adjusts the width of the pass band in accordance with the computed ratio.

4. A receiving device (300) capable of inhibiting an influence of an adjacent interference wave on a desired wave, comprising:
first tuner means (1) for tuning/receiving the desired wave;
second tuner means (2) for tuning/receiving an electric wave having a different frequency from the frequency of the desired wave;
computing means (3) for computing a ratio of an S-meter signal outputted from the first tuner means (1) to another S-meter signal outputted from the second tuner means (2), and for outputting a computed ratio as a value indicating an extent of an influence of an adjacent interference;
intermediate frequency band variable filter means (4a) which passes an intermediate frequency signal (IF1) outputted from the first tuner means (1) and, biases a pass band with respect to the intermediate frequency signal (IF1) or adjusts the width of the pass band in accordance with the computed ratio; and
detector means (5) for detecting a signal component of the intermediate frequency signal outputted from the intermediate frequency band variable filter means (4a).

5. A receiving device (400) according to claim 4, further comprising:
decoder means (6) for reproducing information showing a frequency list of an identical program of a broadcasting station from a detection signal outputted from the detector means (5); and
control means (7) which, upon judging the presence of an adjacent interference in accordance with the computed ratio, switches over to a tuning frequency of the first tuner means (1) in accordance with the information showing the frequency list of the identical program of the broadcasting station.

6. An adjacent interference detecting method for detecting an influence of an adjacent interference wave on a desired wave, comprising the steps of:
providing first tuner means (1) for tuning/receiving the desired wave and second tuner means (2) for tuning/receiving an electric wave having a different frequency from the frequency of the desired wave; and
computing a ratio of an S-meter signal outputted from the first tuner means (1) to another S-meter signal outputted from the second tuner means (2), and outputting a computed ratio as a value indicating an extent of an influence of an adjacent interference.

7. An adjacent interference detecting method according to claim 6, further comprising the steps of:
providing intermediate frequency band variable filter means (4a) which passes an intermediate frequency signal (IF1) outputted from the first tuner means (1);
biasing a pass band with respect to the intermediate frequency signal (IF1) or adjusting the width of the pass band in the intermediate frequency band variable filter means (4a) in accordance with the computed ratio.

## Patentansprüche

1. Nebeninterferenz-Erfassungsvorrichtung (100) zum Erfassen eines Einflusses von einer Nebeninterferenzwelle auf eine gewünschte Welle, welche enthält:
ein erstes Abstimmmittel (1) zum Abstimmen/Empfangen der gewünschten Welle;
ein zweites Abstimmmittel (2) zum Abstimmen/Empfangen von einer elektrischen Welle, welche zu der Frequenz von der gewünschten Welle eine unterschiedliche Frequenz hat; und
ein Berechnungsmittel (3) zum Berechnen eines Verhältnisses von einem S-Meter-Signal, welches von dem ersten Abstimmmittel (1) ausgegeben ist, zu einem weiteren S-Meter-Signal, welches von dem zweiten Abstimmmittel (2) ausgegeben ist, und zum Ausgeben eines berechneten Verhältnisses als ein Wert, welcher ein Ausmaß eines Einflusses von einer Nebeninterferenz anzeigt.

2. Nebeninterferenz-Erfassungsvorrichtung nach Anspruch 1, bei welcher das zweite Abstimmmittel (2) eine elektrische Welle abstimmt/empfängt, welche eine Frequenz hat, welche um 100 kHz, 200 kHz, -100 kHz oder -200 kHz von der Mittenfrequenz von der gewünschten Welle vorgespannt ist.

3. Nebeninterferenz-Entfernungsvorrichtung (200) zum Unterdrücken eines Einflusses von einer Nebeninterferenzwelle auf eine gewünschte Welle, welche enthält:
ein erstes Abstimmmittel (1) zum Abstimmen/Empfangen der gewünschten Welle;
ein zweites Abstimmmittel (2) zum Abstimmen/Empfangen von einer elektrischen Welle, welche zu der Frequenz von der gewünschten Welle eine unterschiedliche Frequenz hat;
ein Berechnungsmittel (3) zum Berechnen eines Verhältnisses von einem S-Meter-Signal, welches von dem ersten Abstimmmittel (1) ausgegeben ist, zu einem weiteren S-Meter-Signal, welches von dem zweiten Abstimmmittel (2) ausgegeben ist, und zum Ausgeben eines berechneten Verhältnisses als ein Wert, welcher ein Ausmaß eines Einflusses von einer Nebeninterferenz anzeigt; und
ein Mittenfrequenzband-Einstellfiltermittel (4a), welches ein Mittenfrequenzsignal durchlässt, welches von dem ersten Abstimmmittel (1) ausgegeben ist, und einen Durchlassbereich mit Bezug auf das Mittenfrequenzsignal (IF1) vorspannt oder die Breite des Durchlassbereiches gemäß dem berechneten Verhältnis einstellt.

4. Empfangsvorrichtung (300), welche dazu in der Lage ist, einen Einfluss von einer Nebeninterferenzwelle auf eine gewünschte Welle zu unterdrücken, welche enthält:
ein erstes Abstimmmittel (1) zum Abstimmen/Empfangen der gewünschten Welle;
ein zweites Abstimmmittel (2) zum Abstimmen/Empfangen von einer elektrischen Welle, welche zu der Frequenz von der gewünschten Welle eine unterschiedliche Frequenz hat;
ein Berechnungsmittel (3) zum Berechnen eines Verhältnisses von einem S-Meter-Signal, welches von dem ersten Abstimmmittel (1) ausgegeben ist, zu einem weiteren S-Meter-Signal, welches von dem zweiten Abstimmmittel (2) ausgegeben ist, und zum Ausgeben eines berechneten Verhältnisses als ein Wert, welcher ein Ausmaß eines Einflusses von einer Nebeninterferenz anzeigt;
ein Mittenfrequenzband-Einstellfiltermittel (4a), welches ein Mittenfrequenzsignal (IF1) durchlässt, welches von dem ersten Abstimmmittel (1) ausgegeben ist, und einen Durchlassbereich mit Bezug auf das Mittenfrequenzsignal (IF1) vorspannt oder die Breite des Durchlassbereiches gemäß dem berechneten Verhältnis einstellt; und
ein Erfassungsmittel (5) zum Erfassen einer Signalkomponente des Mittenfrequenzsignals, welches von dem Mittenfrequenzband-Einstellfiltermittel (4a) ausgegeben ist.

5. Empfangsvorrichtung (400) nach Anspruch 4, welche ferner enthält:
ein Decodermittel (6) zum Abbilden von einer Information, welche eine Frequenzliste von einem identischen Programm von einer Rundfunkstation von einem Erfassungssignal anzeigt, welches von dem Erfassungsmittel (5) ausgegeben ist; und
ein Steuermittel (7), welches, nachdem das Vorliegen von einer Nebeninterferenz gemäß dem berechneten Verhältnis beurteilt ist, zu einer Abstimmfrequenz des ersten Abstimmmittels (1) gemäß der Information, welche die Frequenzliste von dem identischen Programm von der Rundfunkstation anzeigt, umschaltet.

6. Nebeninterferenz-Erfassungsverfahren zum Erfassen eines Einflusses von einer Nebeninterferenzwelle auf eine gewünschte Welle, welches die Schritte enthält:
Bereitstellen von einem ersten Abstimmmittel (1) zum Abstimmen/Empfangen von der gewünschten Welle, und von einem zweiten Abstimmmittel (2) zum Abstimmen/Empfangen von einer elektrischen Welle, welche zu der Frequenz von der gewünschten Welle eine unterschiedliche Frequenz hat; und
Berechnen eines Verhältnisses von einem S-Meter-Signal, welches von dem ersten Abstimmmittel (1) ausgegeben wird, zu einem weiteren S-Meter-Signal, welches von dem zweiten Abstimmmittel (2) ausgegeben wird, und Ausgeben eines berechneten Verhältnisses als ein Wert, welcher ein Ausmaß eines Einflusses von einer Nebeninterferenz anzeigt.

7. Nebeninterferenz-Erfassungsverfahren nach Anspruch 6, welches ferner die Schritte enthält:
Bereitstellen eines Mittenfrequenzband-Einstellfiltermittels (4a), welches ein Mittenfrequenzsignal (IF1) durchlässt, welches von dem ersten Abstimmmittel (1) ausgegeben wird;
Vorspannen eines Durchlassbereiches mit Bezug auf das Mittenfrequenzsignal (IF1) oder Einstellen der Breite des Durchlassbereiches im Mittenfrequenzband-Einstellfiltermittel (4a) gemäß dem berechneten Verhältnis.

## Revendications

1. Dispositif de détection d'interférence adjacente (100) pour détecter une influence d'une onde d'interférence adjacente sur une onde souhaitée, comportant :
des premiers moyens de syntonisation (1) pour syntoniser/recevoir l'onde souhaitée,
des seconds moyens de syntonisation (2) pour syntoniser/recevoir une onde électrique ayant une fréquence différente de la fréquence de l'onde souhaitée, et
des moyens de calcul (3) pour calculer un rapport d'un signal de S-mètre émis par les premiers moyens de syntonisation (1) sur un autre signal de S-mètre émis par les seconds moyens de syntonisation (2), et pour émettre un rapport calculé en tant que valeur indiquant une étendue d'une influence d'une interférence adjacente.

2. Dispositif de détection d'interférence adjacente selon la revendication 1, dans lequel les seconds moyens de syntonisation (2) syntonisent/reçoivent une onde électrique ayant une fréquence polarisée de 100 kHz, 200 kHz, -100 kHz, ou -200 kHz à partir de la fréquence centrale de l'onde souhaitée.

3. Dispositif de suppression d'interférence adjacente (200) pour empêcher une influence d'une onde d'interférence adjacente sur une onde souhaitée, comportant :
des premiers moyens de syntonisation (1) pour syntoniser/recevoir l'onde souhaitée,
des seconds moyens de syntonisation (2) pour syntoniser/recevoir une onde électrique ayant une fréquence différente de la fréquence de l'onde souhaitée,
des moyens de calcul (3) pour calculer un rapport d'un signal de S-mètre émis à partir des premiers moyens de syntonisation (1) sur un autre signal de S-mètre émis par les seconds moyens de syntonisation (2), et pour émettre un rapport calculé en tant que valeur indiquant une étendue d'une influence d'une interférence adjacente, et
des moyens de filtrage variable de bande de fréquences intermédiaire (4a) qui laissent passer un signal de fréquence intermédiaire émis par les premiers moyens de syntonisation (1) et, polarisent une bande passante par rapport au signal de fréquence intermédiaire (IF1) ou ajustent la largeur de la bande passante selon le rapport calculé.

4. Dispositif de réception (300) capable d'empêcher une influence d'une onde d'interférence adjacente sur une onde souhaitée, comportant :
des premiers moyens de syntonisation (1) pour syntoniser/recevoir l'onde souhaitée,
des seconds moyens de syntonisation (2) pour syntoniser/recevoir une onde électrique ayant une fréquence différente de la fréquence de l'onde souhaitée,
des moyens de calcul (3) pour calculer un rapport d'un signal de S-mètre émis à partir des premiers moyens de syntonisation (1) sur un autre signal de S-mètre émis par les seconds moyens de syntonisation (2), et pour émettre un rapport calculé en tant que valeur indiquant une étendue d'une influence d'une interférence adjacente,
des moyens de filtrage variable de bande de fréquences intermédiaire (4a) qui laissent passer un signal de fréquence intermédiaire (IF1) émis par les premiers moyens de syntonisation (1) et, polarisent une bande passante par rapport au signal de fréquence intermédiaire (IF1) ou ajustent la largeur de la bande passante selon le rapport calculé, et
des moyens de détection (5) pour détecter une composante de signal du signal de fréquence intermédiaire émis par les moyens de filtrage variable de bande de fréquences intermédiaire (4a).

5. Dispositif de réception (400) selon la revendication 4, comportant en outre :
des moyens décodeurs (6) pour reproduire des informations indiquant une liste de fréquences d'un programme identique d'un poste de diffusion à partir d'un signal de détection émis par les moyens de détection (5), et
des moyens de commande (7) qui, lors de l'estimation de la présence d'une interférence adjacente selon le rapport calculé, commutent vers une fréquence de syntonisation des premiers moyens de syntonisation (1) selon les informations montrant la liste de fréquences du programme identique du poste de diffusion.

6. Procédé de détection d'interférence adjacente pour détecter une influence d'une onde d'interférence adjacente sur une onde souhaitée, comportant les étapes consistant à :
fournir des premiers moyens de syntonisation (1) pour syntoniser/recevoir l'onde souhaitée et des seconds moyens de syntonisation (2) pour syntoniser/recevoir une onde électrique ayant une fréquence différente de la fréquence de l'onde souhaitée, et
calculer un rapport d'un signal de S-mètre émis par les premiers moyens de syntonisation (1) sur un autre signal de S-mètre émis par les seconds moyens de syntonisation (2), et émettre un rapport calculé en tant que valeur indiquant une étendue d'une influence d'une interférence adjacente.

7. Procédé de détection d'interférence adjacente selon la revendication 6, comportant en outre les étapes consistant à :
fournir des moyens de filtrage variable de bande de fréquences intermédiaire (4a) qui laissent passer un signal de fréquence intermédiaire (IF1) émis par les premiers moyens de syntonisation (1), et
polariser une bande passante par rapport au signal de fréquence intermédiaire (IF1) ou ajuster la largeur de la bande passante dans les moyens de filtrage variable de bande de fréquences intermédiaire (4a) selon le rapport calculé.
